# EUROPÄISCHE PATENTSCHRIFT

(11) **EP 1 085 674 B1**
(45) Veröffentlichungstag und Bekanntmachung des Hinweises auf die Patenterteilung: **28.04.2010**
(21) Anmeldenummer: 00203165.6
(22) Anmeldetag: 12.09.2000
(51) Int. Cl.: H04B 3/56, H04B 3/54

(54) **Netzwerk zur Daten- und Energieübertragung**
Network for data and power transmission
Reseau pour la transmission de données et energie

(30) Priorität: 14.09.1999 DE 19943897; 14.12.1999 DE 19960471
(43) Veröffentlichungstag der Anmeldung: 21.03.2001
(73) Patentinhaber: NXP B.V., 5656 AG Eindhoven (NL)
(72) Erfinder: Wendt, Matthias, Philips Corporate Intellectual Property GmbH, 52064 Aachen (DE); Budde, Wolfgang, Philips Corporate Intellectual Property GmbH, 52064 Aachen (DE); Fuhrmann, Peter, Philips Corporate Intellectual Property GmbH, 52064 Aachen (DE)
(74) Vertreter: Schouten, Marcus Maria

(56) Entgegenhaltungen:
- US-A- 4 621 170
- US-A- 5 789 959
- US-A- 5 949 327

## Beschreibung

Die Erfindung bezieht sich auf ein Netzwerk mit wenigstens zwei Leitungen und mit Netzwerkteilnehmern. Derartige Netzwerke sind in vielfacher Form bekannt und dienen dazu, Daten zwischen den Netzwerkteilnehmern zu übertragen.

Für die Anwendung in Fahrzeugen sind ebenfalls diverse Bussysteme bekannt. In den letzten Jahren hat sich insbesondere der CAN-Bus durchgesetzt. Dieser wird insbesondere für die Übertragung von Steuerungsinformationen und die Abfrage von Sensoren eingesetzt. Dieses Bussystem ist jedoch ähnlich wie andere bekannte Bussysteme nicht dazu in der Lage, außer der Datenübertragung auch Energie für die Netzwerkteilnehmer zu übertragen.

Aus US-A-5 789 959 ist ein Netzwerk bekannt, bei dem zwischen zwei Leitungen des Netzwerkes eine Wechselspannung und zwischen zwei anderen Leitungen des Netzwerkes eine Gleichspannung übertragen wird.

Es ist Aufgabe der Erfindung, ein Netzwerk zu schaffen, das in gleicher Weise für die Datenübertragung und die Energieübertragung geeignet ist und dabei mit möglichst wenig Verbindungsleitungen und möglichst einfacher Isolation der Netzwerkleitungen untereinander auskommt.

Diese Aufgabe ist erfindungsgemäß dadurch gelöst,
daß ein Pol der Spannungsquelle mit beiden Leitungen (1,2) gekoppelt ist, wobei der positive Pol einer Fahrzeugbatterie auf das Netzwerk gekoppelt ist und der negative Pol auf das Fahrzeugchassis,
daß die Netzwerkteilnehmer (3,4,5,6) über eine andere, von dem Netzwerk getrennte elektrische Verbindung mit dem anderen Pol der Spannungsquelle gekoppelt sind,
daß die Netzwerkteilnehmer (3,4,5,6) eine symmetrische Auskopplung der Energieübertragung über beide Leitungen (1,2) des Netzwerks vornehmen,
und daß beide Leitungen (1,2) gegeneinander isoliert sind.

In dem Netzwerk sind also zwei Leitungen vorgesehen, die sowohl für eine Datenübertragung zwischen den Netzwerkteilnehmern wie auch für eine Energieübetragung zu den Netzwerkteilnehmern ausgebildet sind. Ein Pol einer Spannungsquelle wird über beide Leitungen des Netzwerks mit den Netzwerkteilnehmern gekoppelt. Ein anderer Pol wird über einen anderen, nicht zu dem Netzwerk gehörenden Weg auf die Netzwerkteilnehmer gekoppelt.

Die Datenübertragung findet symmetrisch und differentiell über beide Leitungen statt, d.h. ein Datenbit wird über beide Leitungen mit jeweils verschiedener Polarität übertragen.

Die Energieübertragung ist hingegen so ausgelegt, daß möglichst gleiche Ströme in beiden Leitungen fließen. Dies wird durch eine symmetrische Auskopplung der Energie durch die Netzwerkteilnehmer aus den beiden Leitungen des Netzwerks erreicht.

Es ist damit erreicht worden, daß die beiden Leitungen sowohl für eine Energieübertragung wie auch für eine Datenübertragung geeignet sind.

Durch die differentielle Übertragung der Daten und die symmetrische Übertragung der Versorgungsströme auf den beiden Leitungen wird erreicht, daß Störungen aus der Versorgungsleitung sich nur sehr stark gedämpft auf die Datenübertragung auswirken und somit auch unter diesen Umständen eine Beeinträchtigung der Informationsübertragung nicht stattfindet.

Gegenüber bekannten Lösungen werden nicht nur weniger Leitungen, sondern auch weniger Kontaktstellen benötigt. Dies steigert die Zuverlässigkeit.

Dadurch, daß ein Pol der Energieübertragung gemeinsam über beide Leitungen des Netzwerks übertragen wird, ist auch bei Ausfall einer Leitung bzw. des Anschlusses einer Leitung an einen Netzwerkteilnehmer nach wie vor eine Energieübertragung an diesen gewährleistet. Es ist dann zwar die Datenübertragung gestört; der Netzwerkteilnehmer kann aber weiter arbeiten, beispielsweise in einem Notprogramm. Insbesondere in Fahrzeugen ist dies von großer Bedeutung. Durch die Übertragung eines Pols der Energieübertragung gemeinsam über beide Leitungen des Netzwerks kann der Querschnitt der einzelnen Leitungen gegenüber der ursprünglichen Versorgungsleitung halbiert werden; damit erfordert die Signalübertragung praktisch keine zusätzlichen Leitungsquerschnitt.

Zwischen den beiden Leitungen des Netzwerkes sollte eine gute magnetische und kapazitive Kopplung bestehen. Dies kann beispielsweise durch ein Verdrillen der Leitung erreicht werden. Durch die dadurch erreichte gute Kopplung zwischen den beiden Leitungen wirken sich in der Umgebung herrschende magnetische und elektrische Wechselfelder weitgehend als Gleichtaktstörungen auf den beiden Leitungen aus und stören somit nicht die Datenübertragung, die differentiell stattfindet.

Eine Ausgestaltung der Erfindung gemäß Anspruch 2 gibt vorteilhafte Ausgestaltungen insbesondere der Netzwerkteilnehmer an. Diese können die Daten induktiv oder kapazitiv ein- bzw. auskoppeln. Da insbesondere eine symmetrische Auskopplung ihres Verbrauchsstroms aus den beiden Leitungen des Netzwerks wichtig ist, sind in den Netzwerkteilnehmern Induktivitäten vorgesehen, über die diese Ströme ausgekoppelt werden. Durch diese Indukivitäten wird gleichzeitig eine Entkopplung der beiden Leitungen gegeneinander erreicht, die wiederum für die Datenübertragung erforderlich ist. Auf diese relativ einfache Weise kann somit sowohl eine Entkopplung der beiden Leitungen wie auch eine symmetrische Auskopplung der Verbrauchsströme erreicht werden.

Wie gemäß einer weiteren Ausgestaltung der Erfindung gemäß Anspruch 3 vorgesehen, kann die differentielle Auswertung der über die beiden Leitungen des Netzwerks übertragenen Daten vorteilhaft mittels eines Differenzverstärkers erfolgen.

Die Einkopplung wiederum kann vorteilhaft gemäß Anspruch 4 mittels eines Verstärkers vorgenommen werden, der einen nichtinvertierenden und einen invertierenden Ausgang aufweist, welche jeweils auf eine der beiden Leitungen des Netzwerks gekoppelt werden.

Nach einer weiteren Ausgestaltung der Erfindung gemäß Anspruch 5 sollte das Netzwerk grundsätzlich sternförmig aufgebaut sein. Ringförmige Leitungsführung innerhalb des Netzwerks können niederfrequente Ströme verursachen. Um diese zu vermeiden, ist dann vorteilhaft ein Ringkoppler vorzusehen, welcher innerhalb eines solchen Kreises eine galvanische Trennung der Leitungen vornimmt. Damit wird das Schließen niederfrequenter Ströme in einem derartigen Ring verhindert.

Eine für die Funktion des Netzwerks vorteilhafte, gemäß Anspruch 6 vorgesehene magnetische und kapazitive Kopplung zwischen den beiden Leitungen des Netzwerks kann beispielsweise durch deren Verdrillung erreicht werden.

Nachfolgend wird ein Ausführungsbeispiel der Erfindung anhand der Zeichnung näher erläutert. Es zeigen:
Fig. 1 eine schematische Darstellung eines erfindungsgemäßen Netzwerkes mit einigen Netzwerkteilnehmern und einer Energieversorgung,
Fig. 2 ein Beispiel für einen Netzwerkteilnehmer mit kapazitiver Ein- bzw. Auskopplung der Daten,
Fig. 3 ein Beispiel für einen Netzwerkteilnehmer mit induktiver Ein- bzw. Auskopplung der Daten, und
Fig. 4 ein Ausführungsform einer induktiven Ein- bzw. Auskopplung der Daten mittels eines speziellen Netzwerkkopplers.

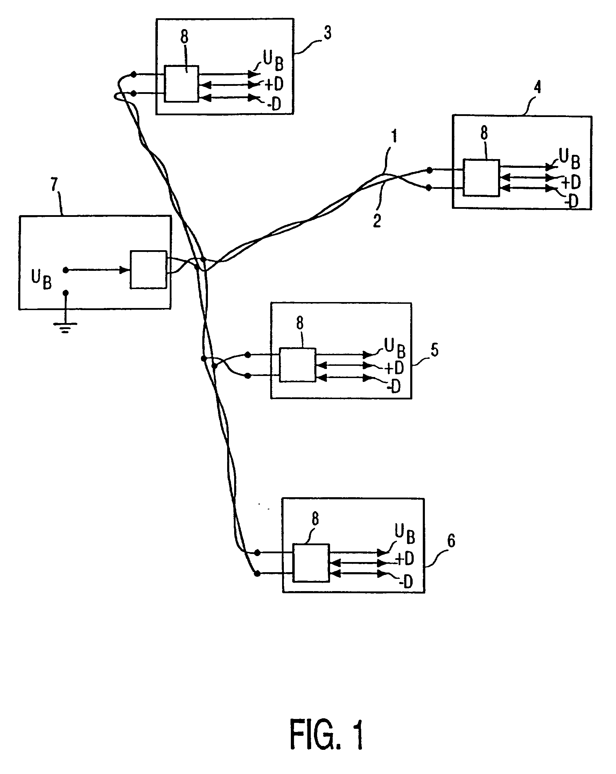

In der Fig. 1 ist die Topologie eines erfindungsgemäßen Netzwerkes dargestellt.

Bei dem Netzwerk kann es sich beispielsweise um ein solches in einem Fahrzeug handeln, welches mehrere in dem Fahrzeug vorgesehene Netzwerkteilnehmer miteinander verbindet.
Das Netzwerk weist zwei Leitungen 1 und 2 auf, die elektrisch und magnetisch gut miteinander verkoppelt sein sollten und hierzu beispielsweise gegeneinander verdrillt sind.

Mittels der beiden Netzwerkleitungen 1 und 2 werden Netzwerkteilnehmer 3, 4, 5 und 6 miteinander gekoppelt. Ferner ist ein Netzwerkteilnehmer 7 vorgesehen, welcher Energie in das Netzwerk einspeist.

Die Netzwerkteilnehmer 3, 4, 5 und 6 können über das Netzwerk mit den beiden Leitungen 1 und 2 Daten austauschen. Ferner werden sie über das Netzwerk mit einem Pol der Energieversorgung versorgt.

Die Übertragung der Daten findet dabei symmetrisch differentiell über die Leitungen 1 und 2 statt, d.h., dass ein Datenbit mit entgegengesetzter Polarität über die beiden Leitungen 1 und 2 übertragen wird und von dem empfangenen Netzwerkteilnehmer auch entsprechend ausgewertet wird.

Die Energieversorgung findet symmetrisch über die beiden Leitungen 1 und 2 statt. Dazu ist es wichtig, dass die Netzwerkteilnehmer 3, 4, 5 und 6 die Versorgungsströme aus den beiden Leitungen 1 und 2 symmetrisch auskoppeln, d.h., dass jeder Netzwerkteilnehmer aus beiden Leitungen den jeweils gleichen Versorgungsstrom auskoppelt.

Die Einkopplung eines Pols einer Spannungsquelle U_{B} wird mittels des Netzwerkteilnehmers 7 vorgenommen. Hierbei ist wichtig, dass die beiden Leitungen 1 und 2 in identischer Weise mit dem positiven Pol der Spannungsquelle U_{B} gekoppelt werden, so dass die Versorgungsströme, die auf beiden Leitungen 1 und 2 fließen, gleich groß sind. Der andere Pol der Spannungsquelle U_{B} kann beispielsweise über das Chassis des Fahrzeugs verbunden werden. Da auch die anderen Nerzwerkteilnehmer 3, 4, 5 und 6 jeweils mit dem Chassis des Fahrzeugs gekoppelt sind, kann so unproblematisch der zweite Pol der Energieversorgung über das Fahrzeugchassis an die Verbraucher gekoppelt werden.

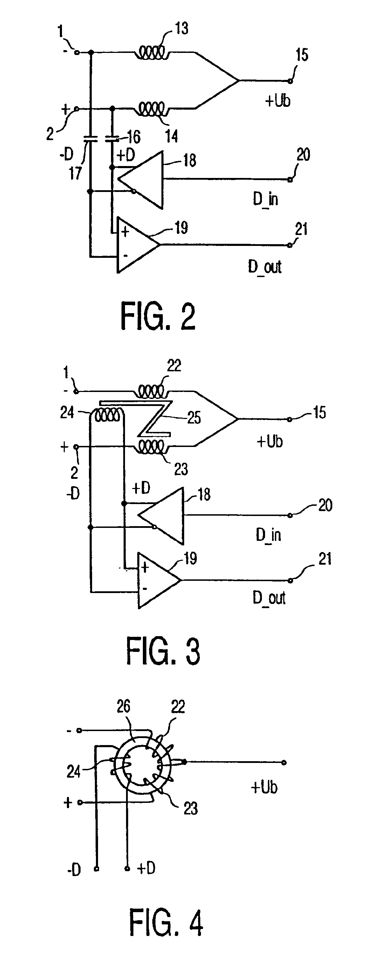

Die Netzwerkteilnehmer 3, 4, 5 und 6 weisen jeweils eine Kopplungsschaltung 8 auf, deren Aufbau nachfolgend anhand der Fig. 2 bis 4 erläutert werden wird. Aufgabe dieser Kopplungsschaltung 8 ist es, einerseits sicherzustellen, dass die Versorgungsströme, die die Netzwerkteilnehmer 3 bis 6 aus den beiden Leitungen 1 und 2 des Netzwerks auskoppeln, symmetrisch sind, d.h., dass für jeden Netzwerkteilnehmer gelten muß, dass dieser aus den beiden Leitungen 1 und 2 jeweils Versorgungsströme gleicher Größe auskoppelt. Außerdem ist an die Koppelschaltungen 8 die Forderung zu stellen, dass sie in der Lage sein müßten, die über die beiden Leitungen 1 und 2 symmetrisch und differentiell übertragenen Daten ein- bzw. auszukoppeln.

Die Topologie des Netzwerkes gemäß Fig. 1 ist sternförmig ausgelegt, so dass keine ringförmigen Elemente in dem Netzwerk entstehen. Werden dennoch in Teilen des Netzwerkes ringförmige Elemente gebildet, so besteht die Möglichkeit, dass in diesen niederfrequente Ströme fließen. Da dies zu vermeiden ist, wird in einem solchen Ring vorteilhaft ein Ringkoppler vorgesehen, welcher eine galvanische Trennung der Leitungen in dem Kreis vornimmt.

Nachfolgend werden anhand der Fig. 2, 3 und 4 einige mögliche Ausführungsformen für die Koppelschaltungen 8 in den Netzwerkteilnehmern 3, 4, 5 und 6 gemäß Fig. 1 erörtert.

Fig. 2 zeigt eine erste Ausführungsform für eine derartige Koppelschaltung, bei der eine kapazitive Ein- und Auskopplung der Daten in bzw. aus den beiden Leitungen 1 und 2 des Netzwerkes vorgenommen wird. Ferner wird über diese Koppelschaltung auch eine Auskopplung des einen Pols der Energieversorgung aus den beiden Leitungen 1 und 2 vorgenommen.

Die Darstellung gemäß Fig. 2 zeigt hierzu zwei Induktivitäten 13 und 14, über die ein Versorgungspolanschluß 15 auf die beiden Leitungen 1 und 2 des Netzwerkes gekoppelt ist. Die beiden Induktivitäten 13 und 14 müssen unbedingt gleiche Größe aufweisen, damit in geforderter Weise gleiche Versorgungsströme aus den beiden Leitungen 1 und 2 des Netzwerkes entnommen werden.

Die Ein- bzw. Auskopplung der Daten wird über zwei Kapazitäten 16 und 17 vorgenommen, welche einerseits mit den beiden Leitungen 1 und 2 des Netzwerks gekoppelt sind und welche andererseits mit Verstärkern 18 bzw. 19 verbunden sind.

Ein Netzwerkteilnehmer, in dem die Koppelschaltung gemäß Fig. 2 vorgesehen ist, stellt die Daten, die er auf das Netzwerk übertragen möchte, an einem ersten Datenanschluß 20 zur Verfügung. Diese Daten, die in der Figur mit D_in gekennzeichnet sind, werden dem ersten Verstärker 18 zugeführt. Der erste Verstärker 18 weist einen nichtinvertierenden Ausgang auf, der mit der Kapazität 16 verbunden ist. Ein zweiter invertierender Ausgang ist mit der Kapazität 17 verbunden, die ihrerseits auf die Leitung 1 des Netzwerkes gekoppelt ist. Damit werden die Daten D_in in symmetrischer differentieller Form über die Kapazitäten 16 bzw. 17 auf die beiden Leitungen 1 bzw. 2 des Netzwerkes übertragen. Ein Datenbit wird beispielsweise mit positiver Polarität auf die Leitung 2 und mit negativer Polarität auf die Leitung 1 des Netzwerkes gekoppelt.

Daten, die auf den beiden Leitungen des Netzwerkes 1 und 2 übertragen werden und die der Netzwerkteilnehmer, in dem die Koppelschaltung gemäß Fig. 2 vorgesehen ist, auswerten möchte, werden über die Kapazitäten 16 und 17 dem zweiten Verstärker 19 zugeführt. Bei dem zweiten Verstärker 19 handelt es sich um einen Differenzvertärker, dessen einem Eingang die mit positiver Polarität über die Leitung 2 und dessen anderem Eingang die mit negativer Polarität über die Leitung 1 übertragenen Daten zugeführt werden. Der Differenzverstärker liefert ausgangsseitig ein Datensignal D_out, welches an einer Quelle 21 dem Netzwerkteilnehmer, in dem die Koppelschaltung gemäß Fig. 2 vorgesehen ist, zur Verfügung gestellt wird.

Durch die kapazitive Auskopplung der über die beiden Leitungen 1 und 2 differentiell und symmetrisch übertragenen Daten wird erreicht, dass sich Gleichspannungsstörungen oder Störungen mit sehr niedriger Frequenz nicht auf die Datenauswertung bzw. auch Einkopplung der Daten in die Leitungen auswirken. Umgekehrt bewirkt eine symmetrische Auskopplung der Versorgungsströme über die beiden Induktivitäten 13 und 14, dass die Datenübertragung nicht gestört wird.

In Fig. 3 ist eine zweite Ausführungsform einer Koppelschaltung dargestellt, bei welcher die Daten induktiv ein- bzw. ausgekoppelt werden. Auch hier wird das Vesorgungspotential +Ub an dem Anschluß 15 dem Netzwerkteilnehmer, in dem die Koppelschaltung vorgesehen ist, zur Verfügung gestellt. Es wird über zwei Induktivitäten 22 und 23 aus den beiden Leitungen 1 und 2 des Netzwerkes ausgekoppelt. Auch hier ist wesentlich, dass die Induktivitäten 22 und 23 gleiche Induktivität aufweisen.

Ein wesentlicher Unterschied der Schaltung gemäß Fig. 3 zu derjenigen gemäß Fig. 2 besteht darin, dass in der Schaltung gemäß Fig. 3 eine induktive Auskopplung bzw. Einkopplung der Daten vorgenommen wird.

Dies wird dadurch erreicht, dass eine dritte Induktivität 24 vorgesehen ist, welche über eine magnetische Kopplung 25 mit den beiden Indukvitäten 22 und 23 magnetisch gekoppelt ist.

Die beiden Anschlüsse der dritten Induktivität 24 sind auf die Ausgänge eines Verstärkers 18 geführt, der einen invertierenden und einen nichtinvertierenden Ausgang aufweist. Dieser liefert die Daten D_in von einem Datenanschluß 20. Ferner sind die beiden Anschlüsse der dritten Induktivität 24 mit einem invertierenden und einem nichtinvertierenden Eingang eines Verstärkers 9 gekoppelt, der ausgangsseitig an einen Datenanschluß 21 die Daten D_out liefert. Die Verschaltung der Verstärker 18, 19 und der Datenanschlüsse 20, 21 entspricht also derjenigen der ersten Ausführungsform der Koppelschaltung gemäß Fig. 2.

Fig. 4 zeigt, wie die induktive Auskopplung mittels der Induktivität 22, 23 und 24 konkret aufgebaut sein kann. Gemäß der Darstellung in Fig. 4 sind diese drei Induktivitäten als Wicklungen 22, 23 und 24 auf einem gemeinsamen Magnetkern 26 vorgesehen, über den die Induktivitäten untereinander magnetisch verkoppelt sind.

Zusammenfassend zeigt das Ausführungsbeispiel des erfindungsgemäßen Netzwerkes gemäß den Fig. 1 bis 4, dass über die beiden Leitungen 1 und 2 des Netzwerkes sowohl eine differentielle symmetrische Datenübertragung wie auch über die Übertragung eines Pols einer Energieversorgung stattfinden kann, ohne dass diese sich gegenseitig stören.

Das Netzwerk ist sehr universell einsetzbar. So ist es nicht erforderlich, dass alle Netzwerkteilnehmer tatsächlich den Datenanschluß nutzen. Es besteht auch die Möglichkeit, an das Netzwerk Verbraucher anzuschließen, welche ausschließlich die Energieversorgung in Anspruch nehmen. Es ist jedoch auch dann sicherzustellen, dass eine symmetrische Auskopplung von Versorgungsströmen aus beiden Leitungen 1 und 2 des Netzwerkes stattfindet.

Das Netzwerk kann redundant ausgelegt sein, d.h. es kann in doppelter Form ausgelegt sein, wobei sowohl die Daten redundant über beide Netzwerke übertragen werden und wobei außerdem ein Pol der Energieversorgung über beide Netzwerke übertragen wird. Es können auch zwei Netzwerke in der Form vorgesehen sein, dass beide Netzwerke jeweils einen Pol der Energieversorgung auf die Netzwerkteilnehmer koppeln. In diesem Falle ist beispielsweise in einem Fahrzeug eine Übertragung eines Pols der Energieversorgung über das Fahrzeugchassis nicht mehr erforderlich. In beiden diesen Fällen können die Daten redundant über beide Netzwerke übertragen werden, so dass sich eine zusätzliche Ausfallsicherheit ergibt.

Ein derartiges Netzwerk kann selbstverständlich nicht nur in Fahrzeugen, sondern auch in anderen Bereichen, in denen eine Verbindung zwischen Energieübertragung und Kommunikation vorteilhaft ist, eingesetzt werden. Beispiele hierfür sind die Industrieautomatisierung, dort insbesondere Feldbussysteme, die Luftfahrttechnik und die Hausautomatisierung, bei der das Netzwerk beispielsweise für Lichttechnik, Alarmanlagen, Heizungsanlagen oder Klimatechnik eingesetzt werden kann.

## Patentansprüche

1. Netzwerk für ein Fahrzeug mit wenigstens zwei Leitungen (1,2) und mit Netzwerkteilnehmern (3,4,5,6),
wobei die beiden Leitungen (1,2) des Netzwerkes sowohl für eine Datenübertragung zwischen den Netzwerkteilnehmern (3,4,5,6) wie auch für eine Energieübertragung von einer Spannungsquelle zu den Netzwerkteilnehmern (3,4,5,6) ausgebildet sind,
wobei die Daten symmetrisch und differentiell über die beiden Leitungen (1,2) übertragen werden,
wobei ein Pol der Spannungsquelle mit beiden Leitungen (1,2) gekoppelt ist, wobei der positive Pol einer Fahrzeugbatterie auf das Netzwerk gekoppelt ist und der negative Pol auf das Fahrzeugchassis,
so daß die Netzwerkteilnehmer (3,4,5,6) über eine andere, von dem Netzwerk getrennte elektrische Verbindung mit dem anderen Pol der Spannungsquelle gekoppelt sind,
wobei die Netzwerkteilnehmer (3,4,5,6) eine symmetrische Auskopplung der Energieübertragung über beide Leitungen (1,2) des Netzwerks vornehmen,
und wobei beide Leitungen (1,2) gegeneinander isoliert sind.

2. Netzwerk nach Anspruch 1, **dadurch gekennzeichnet, daß** die Netzwerkteilnehmer (3,4,5,6) eine induktive oder kapazitive Ein-/Auskopplung Daten vornehmen und daß Induktivitäten (13,14; 22,23) vorgesehen sind, mittels derer die Netzwerkteilnehmer eine symmetrische Auskopplung ihres Verbrauchsstromes aus den beiden Leitungen (1,2) des Netzwerkes vornehmen und mittels derer eine Entkopplung der beiden Leitungen (1,2) gegeneinander erfolgt.

3. Netzwerk nach Anspruch 2, **dadurch gekennzeichnet, daß** die Netzwerkteilnehmer (3,4,5,6) eine differentielle Auswertung der aus den Leitungen (1,2) ausgekoppelten Daten mittels Differenzverstärkern (19) vornehmen.

4. Netzwerk nach Anspruch 2, **dadurch gekennzeichnet, daß** die Netzwerkteilnehmer (3,4,5,6) eine differentielle Einspeisung von Daten mittels eines Verstärkers (18) vornehmen, der einen nichtinvertierenden und einen invertierenden Ausgang aufweist.

5. Netzwerk nach Anspruch 1, **dadurch gekennzeichnet, daß** das Netzwerk im wesentlichen sternförmig aufgebaut ist und daß gegebenenfalls vorgesehene geschlossene Kreise der beiden Leitungen mit Ringkopplern versehen sind, welche eine galvanische Trennung der Leitungen in dem Kreis vornehmen.

6. Netzwerk nach Anspruch 1, **dadurch gekennzeichnet, daß** zwischen den beiden Leitungen (1,2) eine magnetische und kapazitive Kopplung besteht.

7. Netzwerk nach Anspruch 1, **dadurch gekennzeichnet, daß** der Querschnitt der beiden Leitungen so dimensioniert ist, daß er für die über beide Leitungen gemeinsam stattfindende Energieübertragung ausreicht.

## Claims

1. A network for a vehicle comprising at least two lines (1, 2) and having network subscribers (3, 4, 5, 6), where the two lines (1, 2) of the network are arranged both for data transmission among the network subscribers (3, 4, 5, 6) and for transmission of energy from a voltage source to the network subscribers (3, 4, 5, 6), where the data are transmitted over the two lines (1, 2) in symmetrical and differential ways, where a pole of the voltage source is coupled to the two lines (1, 2) where the positive pole of a vehicle battery is coupled to the network and the negative pole to the chassis of the vehicle, so that the network subscribers (3, 4, 5, 6) are coupled to the other pole of the voltage source via another electrical line separated from the network, where the network subscribers (3, 4, 5, 6) carry out a symmetrical decoupling of the energy transmission over the two lines (1, 2) of the network and where the two lines (1, 2) are insulated from each other.

2. A network as claimed in claim 1, **characterised in that** the network subscribers (3, 4, 5, 6) carry out an inductive or capacitive coupling/decoupling of data and **in that** inductances (13, 14; 22, 23) are provided by means of which the network subscribers carry out a symmetrical decoupling of their consumed power from the two lines (1, 2) of the network and by means of which the two lines (1, 2) are mutually decoupled.

3. A network as claimed in claim 2, **characterised in that** the network subscribers (3, 4, 5, 6) carry out by means of differential amplifiers (19) a differential evaluation of the data decoupled from the lines (1, 2).

4. A network as claimed in claim 2, **characterised in that** the network subscribers (3, 4, 5, 6) carry out a differential feeding of data by means of an amplifier (18) which has a noninverting and an inverting output.

5. A network as claimed in claim 1, **characterised in that** the network is structured in essence in the form of a star and **in that** any provided closed circuits of the two lines have ring couplers which perform a DC isolation of the lines in the circuit.

6. A network as claimed in claim 1, **characterised in that** there is a magnetic and capacitive coupling between the two lines (1, 2).

7. A network as claimed in claim 1, **characterised in that** the cross section of the two lines is dimensioned such that it is adequate for the transmission of energy taking place over the two lines together.

## Revendications

1. Réseau pour un véhicule avec au moins deux lignes (1, 2) et avec des clients du réseau (3, 4, 5, 6),
les deux lignes (1, 2) du réseau étant réalisées pour une transmission des données entre les clients du réseau (3, 4, 5, 6) ainsi que pour une transmission d'énergie d'une source de tension vers les clients du réseau (3, 4, 5, 6),
les données étant transmises de manière symétrique et différentielle via les deux lignes (1, 2),
un pôle de la source de tension étant couplé avec les deux lignes (1, 2), moyennant quoi le pôle positif d'une batterie de véhicule est connecté au réseau et le pôle négatif étant connecté au châssis du véhicule,
de sorte que les clients du réseau (3, 4, 5, 6) sont connectés via une liaison électrique distincte du réseau à l'autre pôle de la source de tension,
moyennant quoi les clients du réseau (3, 4, 5, 6) procèdent à un découplage symétrique de la transmission d'énergie via les deux lignes (1, 2) du réseau,
et moyennant quoi les deux lignes (1, 2) sont isolées l'une par rapport à l'autre.

2. Réseau selon la revendication 1, **caractérisé en ce que** les clients du réseau (3, 4, 5, 6) procèdent à un couplage/découplage inductif ou capacitif des données et **en ce que** des inductances (13, 14 ; 22, 23) sont prévues, grâce auxquelles les clients du réseau procèdent à un découplage symétrique de leur courant consommé grâce aux deux lignes (1, 2) du réseau et grâce auxquelles il s'en suit une neutralisation des deux lignes (1, 2) l'une par rapport à l'autre.

3. Réseau selon la revendication 2, **caractérisé en ce que** les clients du réseau (3, 4, 5, 6) procèdent à une évaluation différentielle des données découplées des lignes (1, 2) à l'aide d'amplificateurs différentiels (19).

4. Réseau selon la revendication 2, **caractérisé en ce que** les clients du réseau (3, 4, 5, 6) procèdent à un couplage différentiel de données à l'aide d'un amplificateur (18), lequel présente une sortie de non inversion et une sortie d'inversion.

5. Réseau selon la revendication 1, **caractérisé en ce que** le réseau présente une configuration essentiellement en étoile et **en ce que** des circuits fermés des deux lignes qui sont prévus le cas échéant, sont munis de coupleurs de boucle lesquels procèdent à une séparation galvanique des lignes dans le circuit.

6. Réseau selon la revendication 1, **caractérisé en ce qu'**un couplage capacitif et magnétique est réalisé entre les deux lignes (1, 2).

7. Réseau selon la revendication 1, **caractérisé en ce que** la section des deux lignes est dimensionnée de manière a être suffisante pour la transmission d'énergie ayant lieu en commun par l'intermédiaire des deux lignes.
